Europäisches Patentamt

European Patent Office

Office européen des brevets

(19)

(11) Publication number: **0 102 249**
A2

(12) # EUROPEAN PATENT APPLICATION

(21) Application number: 83305032.1

(22) Date of filing: 31.08.83

(51) Int. Cl.³: **E 21 B 33/138**
**E 21 B 21/00**

(30) Priority: 31.08.82 US 413455
25.07.83 US 516905

(43) Date of publication of application:
07.03.84 Bulletin 84/10

(84) Designated Contracting States:
AT CH DE FR GB LI NL SE

(71) Applicant: Exxon Research and Engineering Company
P.O.Box 390 180 Park Avenue
Florham Park New Jersey 07932(US)

(72) Inventor: Calcavecchio, Peter
83 Garibaldi Avenue
Lodi New Jersey 07066(US)

(72) Inventor: Drake, Evelyn Nobles
11 Brook Lane
Plainfield New Jersey 07060(US)

(74) Representative: Field, Roger Norton et al,
ESSO Engineering (Europe) Ltd. Patents & Licences
Apex Tower High Street
New Malden Surrey KT3 4DJ(GB)

(54) Plugging wellbores with polyacrylic acid shear thickening composition.

(57) A process for plugging a porous formation in a well bore which comprises pumping a shear-thickening composition into drill pipe in the well under conditions of low shear to the point desired to be plugged at which point the composition is forced through the orifices of a drill bit at the end of the drill pipe and subjected to high shear of at least about 1,000 sec.$^{-1}$ which forms a paste in the well bore which plugs the porous formation. The shear-thickening composition comprises a water-in-oil emulsion having granular bentonite dispersed in the continuous oily phase, wherein the oily phase has a polyamine derivative surfactant dissolved therein, and the aqueous phase comprises an aqueous solution of a polyacrylamide and polyacrylic acid. This process may be used for plugging wells having depths in excess of 8,000 feet.

EP 0 102 249 A2

During the drilling and production of wells, such as oil, gas or water wells, various problems sometimes occur which, if not corrected, result in the loss of considerable well production and even loss of the well itself. These problems include blow-outs, lost circulation and channeling. Surface blow-outs occur when the drill bit cuts into a high pressure zone of gas, oil, or water which can blow out the drilling mud and sometimes even the drill stem, bit and surface equipment resulting in their loss and destruction also. Underground blow-outs occur when a fluid in one porous formation flows into the well bore and then out of the well bore into another porous formation. Lost circulation of drilling mud occurs when the drill bit cuts through a porous formation at a pressure such that drilling mud coming down the drill stem flows into the porous structure instead of being forced back up to the surface between the drill stem and well casing. Channeling occurs when a fluid in one porous formation flows through continuous passages in cement behind well casing into another porous formation at a different depth in the well.

A number of methods and compositions have been employed in order to solve these problems, none of which has met with complete success and, in fact, most have not been too successful. One method of trying to stop blow-outs involves loading up the well with a slurry of barite under pressure and under conditions such that the barite is able to settle uniformly at the bottom of the well to form a hard plug which may then be followed up with a cement slurry in order to make the plug more or less permanent. Various methods employed to stop lost circulation include slurries of barite along with fibrous, lumpy or flakey materials which it is hoped will ultimately form a filter cake and then a mat over the porous formation and thus plug it up. Another method used is to employ what is known as gunk which is a slurry of dry, powdered bentonite in diesel oil. When this material is mixed with the right amount of water, the bentonite will hydrate yielding a stiff paste. If formed at the right time and at the right place, this sometimes works as an effective lost circulation and well-plugging material. This type of material and method for its use is disclosed, for example, in U.S. 3,082,823. However, there are many problems associated with the use of this gunk. Among these problems is that the slurry must be kept dry until it reaches the desired formation in the well bore at which time it must be mixed with the proper amount of water in order to form a paste and not an emulsion or a slurry of hydrated benetonite.

U.S. 3,448,800 discloses a plugging method for restoring lost circulation in a well wherein a suspension or slurry of a particulate, water-soluble polymer in a non-aqueous medium is injected into a well. U.S. 2,836,555 discloses a well plugging composition for restoring lost circulation in wells which comprises compressed, dehydrated pellets of bentonite encapsulated within a solid, water-insoluble polymeric coating which has a tiny hole drilled through the surface thereof. U.S. 2,890,169 discloses another well control or lost circulation fluid which is made by forming a slurry of an organophilic bentonite and cement in oil. This slurry is mixed with a surfactant and water to form a composition comprising a water-in-oil emulsion having organophilic bentonite and cement dispersed in the continuous oil phase. As this composition is pumped down the well bore, the oil expands and flocculates the bentonite which, under the right conditions, forms a filter cake on the well bore surface in the porous area.

It is known to those in the art that if one can mix a hydrophilic or water expandable clay, such as bentonite, with the proper amount of water in the presence of a water-soluble polymer which will flocculate and congeal the clay, a much stronger and stiffer paste can be made than that which will occur if the bentonite is merely mixed with water. Thus, U.S. 3,909,421 discloses a high viscosity fluid useful in secondary oil recovery processes. This fluid is made by physically blending a dry, powdered polyacrylamide with bentonite followed by mixing the powder blend with water. U.S. 4,128,598 claims a powdered bentonite-polyacrylamide thickening composition prepared by mixing a water-in-oil emulsion with bentonite to form a damp, free-flowing powdered composition which rapidly forms a viscous, stiff material when mixed with water.

Although many efforts have been made in an attempt to use bentonite-water systems with or without a water-soluble polymer which will flocculate and congeal the bentonite, one of the main problems has been to keep the bentonite away from the water until same reaches the desired part of the well bore, which is usually at the bottom. Another problem has been making sure that the bentonite mixes with the proper amount of water to rapidly form a stiff paste or cement at the location of the problem in the well.

This invention relates to a process for plugging or sealing a porous earth formation which comprises contacting said porous formation with a shear thickening fluid or composition under conditions of shear sufficient to form a paste from the shear thickening composition which plugs or seals the porous formation. The shear thickening composition useful in the process of this invention comprises a water-in-oil emulsion having particles of hydrophilic, water swellable clay dispersed in the continuous, oily phase thereof, wherein said oily phase comprises a hydrocarbon liquid having an amine derivative surfactant dissolved therein and the dispersed aqueous phase of the emulsion comprises an aqueous solution of a polyacrylamide and polyacrylic acid.

The combination of amine derivative surfactant in the oil phase and polyacrylamide polymer and polyacrylic acid in the dispersed aqueous phase results in an unexpected formation of a coating or membrane film around each droplet of dispersed aqueous phase. However, if the pH of the aqueous phase is above about 4.5, then the coating or membrane will not form. Hence, an important feature of this invention is that the pH of the dispersed aqueous phase must be no greater than about 4.5. It is preferred that the pH of this aqueous phase be between from about 2.5 to 4.5.

This process will be useful for plugging porous formations in deep wells having depths in excess of about 10,000 feet as well as in shallower wells, for forming earthen dams, for lining the bottom and sides of waste disposal sites against seepage, etc. When used as a well control fluid, the shear thickening composition will be pumped down into the well through a conduit, such as drill pipe, until it reaches the portion of the well bore that is to be plugged. At that point it will be subject to conditions of relatively high shear to form a paste to plug the well bore. The high shear may be achieved by forcing the shear thickening composition through the holes of a drill bit at the end of the drill pipe.

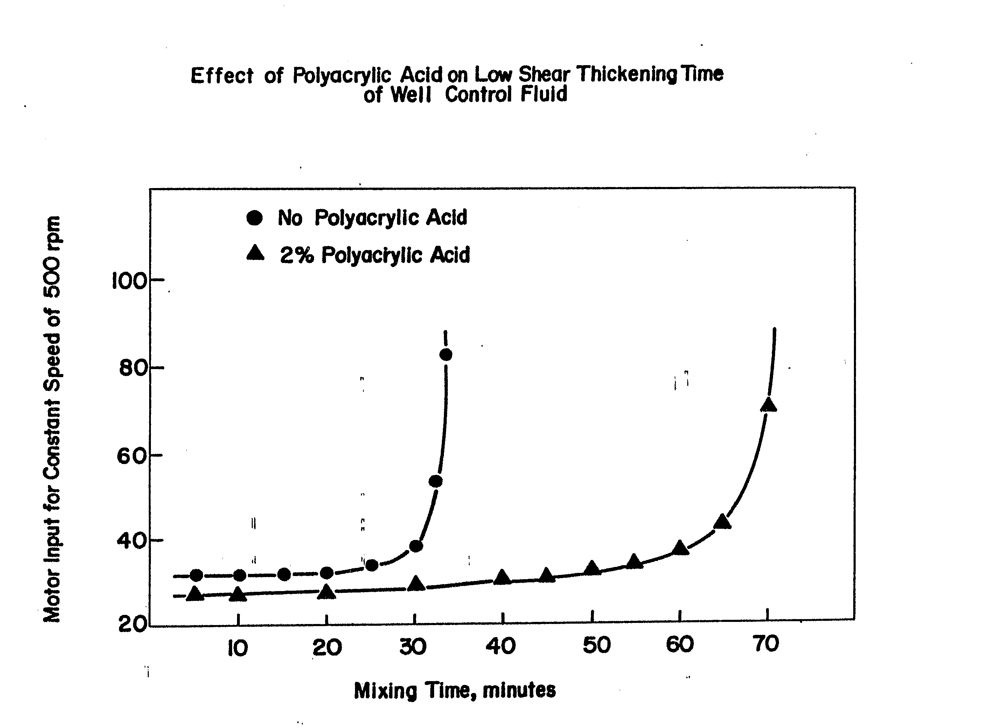

The attached Figure is a graph illustrating how the presence of polyacrylic acid in the aqueous phase increases the low shear thickening time of the shear thickening composition useful in the process of this invention.

By shear thickening composition is meant that the application of shear to the composition useful in the process of this invention will result in the formation of a sticky, rubber-like paste or solid, whose strength and integrity is a function of the intensity and duration of the shear forces employed as well as the particular formulation utilized. The greater the shear rate the faster the paste is formed and the stronger it will be. When the clay is mixed or dispersed into the emulsion it slowly starts to adsorb water. Thus, if one mixes or disperses the clay into the emulsion very gently, using relatively low shear forces and then allows the so-formed composition of this invention to remain undisturbed, the clay will settle out on the bottom and slowly start to adsorb water and ultimately congeal. If sufficient time has elapsed and the settled clay starts to congeal, the shear force required to redisperse the clay will rapidly form a paste. Thus, it is preferred to use the composition of this invention as soon as possible after preparing same.

One can thus understand that the term "shear thickening" is a term of art and is difficult to quantify with precision. If one intends to use the process of this invention for well control, one may use low shear devices such as those normally used for mixing cement at a well site (i.e., for cementing behind well casing) to form the shear-thickening composition useful in this invention. Illustrative, but non-limiting examples of such devices include Halliburton ribbon or turbine blenders and cement mixers. After the shear thickening composition has been formed it will be pumped down the drill pipe at a rate broadly ranging from about 0.1 to 10 barrels per minute (bpm) wherein it will be subject to relatively low shear rates broadly ranging from less than about 1 to about 1,000 sec.$^{-1}$. Even under these conditions the viscosity of the composition slowly rises as the clay adsorbs water and slowly hydrates. However, although some prehydration is desirable if one uses shear thickening compositions that do not contain polyacrylic acid, because, all other things being equal, it will result in a stronger paste formed by the subsequent high shear rates resulting from forcing the shear thickening composition through the holes in the drill bit it has unexpectedly been found that this prehydration low shear thickening time is not necessary to form strong pastes using the polyacrylic acid employed in this invention.

With the emulsion/clay dispersions of the prior art, it has been difficult to pump anything more than about 8,000-10,000 feet down the drill pipe without the composition starting to congeal and prematurely setting inside the pipe and still have adequate paste strength after high shear rates to have been applied. The process of this invention avoids this problem. When the composition useful in the process of this invention is finally pumped through the holes or nozzles of the drill bit, it is subjected to high shear rates broadly ranging from about 2,000 to 1,000,000 sec.$^{-1}$, preferably 10,000 to 1,000,000 sec.$^{-1}$, which instantly forms a sticky, rubbery paste. The shear strength of this paste, as measured by the laboratory method set forth in the following two paragraphs, will be in excess of at least about 1,000 lbs/100 ft.$^2$, preferably 2,000 lbs/100 ft.$^2$ and still more preferably in excess of 3,000 lbs/100 ft.$^2$. The shear strength of the paste formed from the shear thickening fluid or composition is expressed in pounds per 100 ft.$^2$ as opposed to pounds per ft.$^2$, because 100 ft.$^2$ roughly corresponds to the internal area of a 90 ft. string of drill pipe having an inside diameter of about 4 inches.

In the laboratory, this shear strength may be determined by forming between about 400 or 500 grams of the shear thickening composition and then placing same in a low shear mixing cell for evaluation. This mixing cell is a jacketed glass beaker with internal dimensions of approximately three and one-half inches deep and two and one-half inches wide. The beaker is fitted with a Plexiglass cover through which a hole is drilled to receive the shaft of an egg beater impeller. The egg beater impeller has a diameter of one and a half inches, is two and a quarter inches long and is placed in the beaker so that it just clears the bottom. Sufficient composition is placed in the beaker so that it just covers the top of the impeller. Hot water is circulated through the jacket of the beaker in order to maintain the contents thereof at a temperature of about 120°C. After the shear thickening composition is placed in the warm cell, the egg beater impeller is rotated at a speed of 500 rpm until the composition starts to gel. The point at which the fluid abruptly thickens is defined as the low shear thickening time. This point is quite reproducible and the impeller shaft at this point requires an abrupt increase in input of 90 mv in order to maintain the 500 rpm. In most instances the point of low shear thickening is accompanied by an obvious change in the physical appearance of the dispersion.

After the composition starts to gel, it is then placed in a high shear test cylinder containing a floating piston. The cylinder has a one quarter inch ball valve opening at one end and the other end is pressurized by nitrogen at about 1500 psi. Thus, the sample is placed in the high shear piston cell, the floating piston placed behind the sample, the cell is sealed and then pressurized with nitrogen at about 1500 psi behind the piston. After the chamber is pressurized, the ball valve is opened and the sample is forced through the one quarter inch opening in considerably less than one second which forms a stiff paste substantially instantaneously.

The shear strength of the so-formed paste is measured by noting the distance that a hollow, aluminum cylinder 3.5 inches long x 1.4 inches wide with a wall thickness of .01 inches sinks into the paste under the force of various weights after a period of 20 seconds. The shear strength is then calculated from the following expression:

$$\text{Shear strength, Lb/100 ft.}^2 = 3.6 \times \frac{\text{Total wt., grams}}{\text{Penetration distance, Inches}}$$

It should be noted that the shear strength is expressed in pounds per 100 ft.$^2$ as opposed to pounds per ft.$^2$, because 100 ft.$^2$ roughly corresponds to the internal

area of a 90 ft. string of drill pipe having an inside diameter of about 4 inches.

As herein before stated, clays useful in the composition of this invention are hydrophilic, water-swellable clays. This includes those clays which are well known to those skilled in the art as useful in well drilling and well control operations. Particularly preferred are montmorillonite and bentonite clays. Species of these clays include beidellite, nontronite, hectorite, and saponite. As a practical matter, cost considerations may dictate that the clays used in this invention will be the sodium montmorillonite or bentonite clays. A commercially available clay that has been found to be useful in this invention are Volclays available from the American Colloid Company. These clays are 90% montmorillonite with about 70-75% of the montmorillonite in the sodium form. Granular clay is preferred to powdered clay. It has been found that the larger the clay particle size used in the shear thickening composition useful in the process of this invention, the longer will be the low shear thickening time and the more clay can be used at a given viscosity. In well control processes, the upper limit of the clay particle size will be limited to that which can pass through the holes in the drill bit. For most applications, it will be preferred to use granular clay having a particle size ranging between about 10 to 200 Tyler mesh and, preferably 40 to 200 mesh although 10-60 mesh clay has also been successfully used in the practice of this invention. If this invention is to be used for well control purposes, then granular clay should be used and preferably granular clay that has had fines removed. Hydrophobic clays, such as those made by reacting bentonite with one or more long chain hydrocarbon quaternary ammonia compounds, are not included in the scope of this invention.

The continuous, oily phase of the emulsion will be a liquid which is immiscible with water and with the interior aqueous phase of the emulsion. In general, this will comprise any oil or hydrocarbon liquid, typically a mineral oil. Illustrative, but not-limiting examples of oily liquids that have been tried and found to work as the oily phase include paraffinic hydrocarbons such as Low Odor Paraffin Solvent (LOPS) available from the Exxon Chemical Company and Norpan 13 and Solvent 100 Neutral (S-100N) available from Exxon Company U.S.A., respectively, as well as solvents having an appreciable aromatic content such as Mentor 28 and Mentor 32 which are available from the Exxon Company U.S.A. Further, kerosene and diesel fuel will also work, but not as well as the others. That is, the use of kerosene and diesel fuel will result in a reduction of the low shear thickening time and pumpability of the shear thickening fluid and result in a weaker paste. Further, it should be emphasized again that the exact nature of the oil is not critical as long as it is not miscible with the aqueous internal phase of the emulsion and does not react with the clay or any of the other components of the composition.

The continuous, oily, water immiscible phase of the emulsion must contain one or more oil soluble amine derivative and preferably polyamine derivative surfactants for forming and stabilizing the emulsion. Surfactants that have been found to be particularly useful in the composition of this invention comprise alkylene polyamine derivatives of polyalkenyl succinic anhydrides. These materials are known to those skilled in the art and are taught, for example, in U.S. Patent No. 3,172,892, the disclosures of which are incorporated herein by reference. Also useful are borated and carboxylated derivatives of these materials such as those disclosed in U.S. 4,173,540 and British Patent 1,018,982, respectively, the disclosures of which are also incorporated herein by reference.

The polyalkenyl succinic anhydrides useful in preparing these surfactants will generally comprise those wherein the polyalkenyl group has a $M_n$, number average molecular weight, of about 700 to 5,000, preferably 900 to 2,000. The methods of preparation are well known in the art, i.e., reaction of maleic anhydride with either the polyolefin itself or with a chlorinated polyolefin which in either case provides the desired polyalkenyl succinic anhydride. Polyisobutylene is preferred but other polymers of $C_3$ or $C_4$ olefins such as polybutene-1 and polypropylene are suitable, including mixtures of such polyolefins. Polyisobutylene succinic anhydride is referred herein as PIBSA.

Preferred alkylene polyamines are also well-known and are represented by the formula $NH_2(CH_2)_n-(NH(CH_2)_n)_mNH_2$, wherein n is 2 to 3 and m is 0 to 10. Illustrative are ethylene diamine, diethylene triamine, triethylene tetramine, tetraethylene pentamine, pentaethylene hexamine, and the like.

As hereinbefore stated, the aqueous phase of the emulsion must comprise an aqueous solution of both a polyacrylamide polymer and a polyacrylic acid. Both anionic or partially hydrolyzed polyacrylamide and nonionic or unhydrolyzed polyacrylamide will work in this invention, but nonionic polyacrylamide is preferred. A wide variety of commercially available polyacrylic acids with molecular weights ranging from about 30,000 to 4,000,000 have been found to work effectively in this invention. Illustrative, but non-limiting examples include Acrysol A-1, A-3 and A-5 available from the Rohm & Haas Company as well as Polysciences, Inc.'s Nos. 3326, 3312 and 6501 and Colloids, Inc.'s X-0067-66A, X-0098-NK-99A and X-0102-NK-25.

Polyacrylamides having molecular weights ranging from 100,000 to 6,000,000 have been successfully used in the shear thickening composition of this invention. It has been found that higher molecular weight polyacrylamides impart a more rubbery, elastomeric character to the pastes formed by subjecting the compositions of this invention to relatively high shear. That is, the higher the molecular weight of the water soluble polyacrylamide used in the composition of this invention, the greater will be both the shear strength and integrity of the so-formed paste, even in the presence of flowing fluids, such as gas, oil, brine, water, etc. However, the higher the molecular weight of the polyacrylamide used the higher will be the viscosity of the resulting solution. On the other hand, lower molecular weight polyacrylamides give lower viscosities, but require the use of more polyacrylic acid.

The exact amounts of the various components of the shear-thickening composition useful in the process of this invention will vary somewhat depending upon the nature and molecular weight of the amine derivative surfactant, polyacrylamide, polyacrylic acid, the nature of the oil, etc. The following table, based on 100 parts by weight of 10-60 mesh (Tyler) granular KWK clay, illustrates the general and preferred ranges of the various ingredients to each other of the shear thickening composition of this invention.

|  | Parts by Weight | |
|---|---|---|
|  | General | Preferred |
| clay, 40-200 mesh | 100 | 100 |
| water | 25-400 | 100-300 |
| polyacrylamide | 0.1-10 | 0.25-5 |
| oil | 25-130 | 50-100 |
| surfactant | 1-30 | 5-15 |
| polyacrylic acid | 0.1-10 | 0.25-5 |

A number of different methods may be employed to prepare the composition useful in the process of this invention, the precise method used being dictated by the convenience of the user. Thus, one may form a dispersion of the clay in the surfactant containing oil. After this dispersion is formed an aqueous solution of polyacrylamide and polyacrylic acid may be added to the oily dispersion to form a water-in-oil emulsion wherein the aqueous solution is emulsified in the clay-containing continuous oily phase. In this method, one may mix the oil, surfactant and clay in any order without affecting the performance of the composition of this invention before the aqueous solution is emulsified into the oily phase. Alternatively, one may form the water-in-oil emulsion in which the aqueous phase is emulsified into the surfactant-containing oil. After the emulsion has been formed, the clay will be dispersed into the continuous oily phase.

The emulsion of this invention is not stable inasmuch as the coating or film around each droplet of dispersed aqueous phase slowly disappears as time progresses. As this film disappears or dissolves into the emulsion, the low shear thickening time enhancement declines. Agitation and elevated temperature both accelerate this aging process. By way of example, a laboratory sample rolled in an 8 oz. jar for 5 days at 120°F resulted in a total loss of low shear thickening time enhancement. Examination of the emulsion in a microscope at the end of the 5 days revealed no more polymeric film remaining on the surface of the dispersed microdroplets of aqueous phase. Another unique feature of the emulsion of this invention is that the size of the microdroplets of dispersed aqueous phase is larger (i.e., 10-500 microns) than those of similar emulsions without polyacrylic acid in the aqueous phase (10-100 microns). Emulsions of this invention have been made with dispersed droplets as big as 5,000 microns and work satisfactorily in the shear thickening composition of this invention. It is preferred that the average droplet size be greater than 100 microns. Laboratory tests have shown that the larger the droplet size of the dispersed aqueous phase, the greater will be the strength of the paste. This is in marked contrast to the same type of shear thickening composition, but without containing polyacrylic acid where the smaller droplet sizes are preferred.

If desired, the aqueous phase of the composition useful in the process of this invention may also contain one or more low molecular weight alcohols or glycols as antifreezes to prevent the aqueous phase of the emulsion from freezing at low temperatures. This may be particularly desirable if one intends to use the composition of this invention in cold weather. Any of the commonly used antifreezes may be employed in the aqueous phase of the composition of this invention such as methanol, isopropanol, ethylene glycol, propylene glycol, etc. When an antifreeze is employed in the aqueous phase of this emulsion, it will generally be employed in said aqueous phase in an amount broadly ranging from about 10 to 35 wt. % thereof.

In a typical well plugging application, 116 pounds of American Cyanamid P-250 polyacrylamide will be dissolved into 16 barrels (about 5,600 lbs.) of fresh water using a turbine blender such as a Halliburton MX 5000B Turbine Type Batch Mixer equipped with two 50 bbl. blending tanks. Next, 290 pounds of Rohm & Haas' Acrysol A-3 will be dissolved in 16 barrels (about 5,600 lbs.) of fresh water in a blending tank on a Halliburton HT 400 Pump Truck and then added to the polyacrylamide solution in the turbine mixer. Rohm & Haas' Acrysol A-3 is an aqueous solution containing 25 wt.% polyacrylic acid. In the other 50 bbl. tank of the turbine mixer, a little more than one drum (about 460 lbs) of a PIBSA-polyamine derivative surfactant will be dissolved into twelve drums (about 4100 lbs) of oil such as Norpar 13. After the surfactant has been dissolved in the oil, an oil external emulsion or water-in-oil emulsion will then be formed by slowly adding the aqueous polymer solution to the oil while mixing with a marine propeller or the like. The rate of addition of polymer water to the oil will be no greater than about 1 bbl. (42 gallons) per minute. After all of the polymer solution has been added to and emulsified in the oil, the resulting emulsion will be circulated several times through a triplex pump to ensure complete emulsification.

Immediately prior to use at the well site, about eight barrels of the emulsion prepared above will be set aside for use as front and back spacers for the shear thickening fluid and circulated several times through a Triplex pump to increase its viscosity which should be greater than the viscosity of the drilling mud. The rest of the emulsion will be placed into either a Halliburton ribbon blender or a Halliburton turbine blender. In the blender, 43 sacks (4300 lbs.) of 40-200 Tyler mesh MX- 80 Volclay will be dispersed into the continuous oily phase of the emulsion. While the clay is being dispersed into the continuous oily phase of the emulsion, about 20 barrels of water pre-flush will be pumped into the drill pipe in the well bore, the drill pipe containing circulating drilling mud. This pre-flush will be followed by three barrels of the emulsion spacer and then by approximately 46 barrels of the shear-thickening fluid formed in the Halliburton ribbon blender. The shear-thickening fluid will be pumped down into the drill pipe at a rate of about one barrel per minute using a Halliburton pump truck containing a triplex pump. The shear-thickening fluid will be followed with five barrels of emulsion and 20 barrels of water as spacers. Drilling mud will then be used to displace or push the shear-thickening fluid through the drill pipe to the zone desired to be plugged in the well bore. The drilling mud will be pumped into the drill pipe at a rate of about three barrels per minute. When the shear-thickening fluid reaches the drill bit, the drilling mud will then be pumped into the drill pipe at a rate of about six barrels per minute so that the shear-thickening fluid is sheared through the drill bit nozzles at a rate of about six barrels per minute.

The invention will be further understood by reference to the Examples below.

EXAMPLE 1

This example demonstrates the low shear-thickening time enhancement of the composition of this invention using polyacrylic acid in the dispersed aqueous phase, compared to the same composition without invention. Acrysol A-3 is a 25 wt.% aqueous solution of polyacrylic acid which has a molecular weight of less than 150,000. Another sample of shear-thickening composition was made using the same ingredients and procedure used to form the shear-thickening composition of this invention, except that the aqueous phase did not contain any polyacrylic acid.

Each sample of shear-thickening composition was then placed in a low shear mixing cell for evaluation of low shear-thickening time using the laboratory procedure set forth under Detailed Description, supra.

As previously stated, the results of this experiment are set forth in the accompanying Figure and clearly illustrate the low shear thickening time enhancement using the composition of this invention.

EXAMPLE 2

This experiment demonstrates the effect of the polyacrylic acid concentration in the aqueous phase of the shear thickening composition and its relation to both low shear thickening time and the strength of the paste formed from the shear-thickening composition.

In this experiment, the shear thickening composition of this invention was made by dissolving 8 grams of the borated PIBSA-polyamine derivative surfactant, referred to in Example 1, into 72 grams of solvent 100 Neutral oil followed by dispersing the aqueous phase into the oil using a lab type propeller mixer at a speed of 1,000 rpm to form the water-in-oil emulsion, followed by dispersing 120 grams of the clay in the so-formed emulsion using a spatula. The aqueous phase in all cases was 200 grams of an aqueous solution annular space between the drill pipe and well casing after being pumped through the drill bit nozzles. The well contained about 13,000 feet of casing having an I.D. of 8.5 inches with a cement plug at the bottom and about 12,500 feet of drill pipe having a 5 inch O.D. and 4.3 inch I.D. A rotary drill bit having one 11/32 inch and one 14/32 inch nozzle was attached to the bottom of the drill pipe. The bottom hole circulating temperature of the well was 185°F.

A shear-thickening fluid of this invention having the following composition was prepared using the procedure outlined in the description on pages 15 and 16.

|            | parts by weight |
|------------|-----------------|
| Water      | 219             |
| Polymer A  | 2.2             |
| Polymer B  | 1.4             |
| Oil        | 80              |
| Surfactant | 9               |
| Clay       | 100             |

Polymer A was American Cyanamid's P-250 polyacrylamide, polymer B was Rohm and Haas's Acrysol A-3 polyacrylic acid, the oil used was Norpan 13 from Exxon Company U.S.A., the surfactant was a borated derivative of the reaction product of polyisobutylene which was prepared by condensing 2.1 moles of polyisobutenyl succinic anhydride having a Saponification Number of 112 and a number average molecular wt. ($\bar{M}_n$) of about 900 dissolved in a neutral mineral oil to provide a 50 weight percent solution, with one mole of said alkylene polyamine. The procedure used to prepare this surfactant was the same procedure used in Example 2 of U.S. 4,173,540.

The clay was a 40-200 Tyler mesh MX-80 clay obtained from the American Colloid Company.

Twenty-two barrels of the emulsion were prepared, fourteen of which were used to prepare the shear thickening fluid with the remaining eight barrels of the emulsion set aside for use as spacers and transferred to a tank on a pump truck. Thirteen sacks (1300 lbs.) of the clay were added to the remaining emulsion in a Halliburton turbine blender to form the 15 barrels of the shear-thickening fluid. After the shear-thickening fluid was prepared, twenty barrels of water were pumped into the drill pipe to insure that the pump lines and drill pipe were not plugged and to clean the lines. The twenty barrel water flush was followed by three barrels of the emulsion spacer, fifteen barrels of the shear thickening fluid, five barrels of emulsion spacer and, finally twenty barrels of water post flush. The viscosity of the emulsion used as spacers has been increased by circulating same through a Triplex pump several times using the procedure set forth on page 15. The viscosity of the emulsion spacer was less than that of the shear thickening fluid, but greater than that of the drilling mud. It should be noted that there was drilling mud in the pipe prior to the introduction of the water flush, emulsion spacer and shear-thickening fluid.

The shear-thickening fluid and emulsion spacers were pumped into the drill pipe using a triplex pump. After the water flush, the emulsion spacers and shear-thickening fluid were pumped into the drill pipe at a rate of about 3 barrels per minute. The shear-thickening fluid and spacers were displaced or pushed down through the drill pipe with drilling mud which was pumped at a rate of about 5 barrels per minute. The shear-thickening fluid was pumped out through the drill bit to form the paste and plug the annular space between the drill pipe and well casing. The so-formed plug (paste column) had a strength greater than 1000 lb/ 100 ft$^2$.

CLAIMS:

1. A process for plugging an underground formation which comprises transporting a shear thickening fluid to said formation under conditions of relatively low shear through a conduit extending into said formation and then subjecting the shear thickening fluid to conditions of relatively high shear at that point of the formation desired to be plugged to form a paste which plugs said formation, wherein said shear thickening fluid comprises a water-in-oil emulsion having particles of granular, hydratable, water-expandable clay dispersed in the continuous oily phase thereof, said oily phase comprising a hydrocarbon oil and having an amine derivative surfactant dissolved therein and wherein said dispersed aqueous phase of said emulsion comprises an aqueous solution of both a polyacrylic acid and a polyacrylamide and has a pH of no greater than about 4.5.

2. A process according to claim 1 wherein said low shear conditions comprise shear rates of less than about 100 sec.$^{-1}$.

3. A process according to either of claims 1 and 2 wherein said high shear conditions comprise shear rates of at least about 2,000 sec.$^{-1}$.

4. A process according to any one of the preceding claims wherein said clay comprises bentonite.

5. A process according to any one of the preceding claims wherein said surfactant comprises a polyamine derivative surfactant.

6. A process according to claim 5 wherein said surfactant comprises an alkylene polyamine derivative of a polyalkenyl succinic anhydride.

7.    A process according to claim 6 wherein said surfactant comprises an alkylene polyamine derivative of PIBSA.

8.    A process according to any one of the preceding claims wherein said high shear conditions include shear stresses of between about 10,000 to 1,000,000 sec. $^{-1}$.

9.  A process for plugging a portion of a well bore using a shear-thickening composition and an emulsion spacer wherein a conduit, which contains a fluid, extends down into the well bore from the surface thereof at least to the portion of said well bore desired to be plugged and wherein said shear-thickening composition comprises a water–in–oil emulsion having particles of hydratable, water–expandable clay dispersed in the continuous oily phase thereof, said oily phase comprising a hydrocarbon liquid having a polyamine derivative surfactant dissolved therein and wherein said dispersed aqueous phase of said emulsion comprises an aqueous solution, having a pH of no greater than about 4.5, of both a polyacrylic acid and a polyacrylamide, and wherein said spacer comprises a water–in–oil emulsion having a composition similar to the water–in–oil emulsion of said shear-thickening composition, said process comprising :

(a)   positioning the bottom of said conduit to the location of said well bore desired to be plugged;

(b)  pumping a first portion of said spacer emulsion into said fluid containing conduit;

(c)  pumping said shear-thickening composition into said conduit so that said shear thickening composition contacts said spacer emulsion in said conduit;

(d)  pumping a second portion of said spacer emulsion into said conduit so that it contacts said shear-thickening composition;

(e)  pumping a displacing fluid into said conduit so that it contacts said second portion of said spacer emulsion and displaces said shear-thickening composition at a relatively low shear rate to the bottom of said conduit; and

(f)  increasing the pumping rate of said displacing fluid into said conduit to force said shear-thickening composition out of the bottom of said conduit under conditions of shear of at least about 2,000 sec.$^{-1}$ to form a paste and plug said well bore.

10. A process according to claim 9 wherein said conduit comprises a drill pipe.

11. A process according to claim 10 wherein the high shear mixing comprises passing said shear-thickening composition through orifices or nozzles appurtenant to said drill pipe.

0102249

Effect of Polyacrylic Acid on Low Shear Thickening Time of Well Control Fluid

Motor Input for Constant Speed of 500 rpm

● No Polyacrylic Acid
▲ 2% Polyacrylic Acid

Mixing Time, minutes